# EUROPÄISCHE PATENTANMELDUNG

(11) **EP 2 169 347 A2**
(43) Veröffentlichungstag der Anmeldung: **31.03.2010**
(21) Anmeldenummer: 09166800.4
(22) Anmeldetag: 30.07.2009
(51) Int. Cl.: G01C 3/08, G01C 15/00, G01S 17/08, G06F 1/16

(54) **Vorrichtung zur Längenmessung und Adapter zur Aufnahme einer Vorrichtung zur Längenmessung**

(30) Priorität: 29.09.2008 DE 102008042440
(71) Anmelder: Robert Bosch GmbH, 70442 Stuttgart (DE)
(72) Erfinder: Zimmermann, Thomas, 80639 Muenchen (DE)

(57) **Zusammenfassung**

Die Erfindung bezieht sich auf eine Vorrichtung zur Längenmessung aufweisend ein Gehäuse, eine Sendeeinrichtung zum Erzeugen eines optischen Messstrahls, eine Empfangseinrichtung zum Detektieren von Teilen des von einem Messobjekt zurückgestreuten Messstrahls und eine Umlenkeinrichtung zum Umlenken des von der Sendeeinrichtung ausgesandten Messstrahls und/oder des Empfangsbereichs der Empfangseinrichtung. Die Erfindung bezieht sich ebenfalls auf einen Adapter zur Aufnahme einer Vorrichtung zur Längenmessung mit einem Gehäuse, einer Sendeeinrichtung zum Erzeugen eines optischen Messstrahls und einer Empfangseinrichtung zum Detektieren von Teilen des von einem Messobjekt zurückgestreuten Messstrahls, wobei der Adapter einen Rahmen zur Aufnahme der Vorrichtung und eine Umlenkeinrichtung zum Umlenken des von der Sendeeinrichtung ausgesandten Messstrahls und/oder des Empfangsbereichs der Empfangseinrichtung aufweist.

## Beschreibung

### Stand der Technik

Die Erfindung geht aus von einer Vorrichtung und einem Adapter nach Gattung der unabhängigen Ansprüche.

Aus der EP 1 475 608 A2 ist ein elektrooptisches Distanzhandmessgerät bekannt, das sowohl ein elektrooptisches Distanzmessmodul, bestehend aus einer elektrischen Strahlquelle zur Erzeugung eines optischen Messstrahls, einem Strahlempfänger zum Empfang von Teilen des von einem Messobjekt zurückgestreuten Messstrahls und einem Ausgabemittel für die ermittelte Distanz, als auch ein mechanisches Distanzmessmittel (z.B. ein Stahlmessband oder einen Gliedermessstab) enthält. Hierbei sind beide Messmittel in einer festgelegten Anordnung miteinander verbunden, was eine Längenmessung nur entlang einer durch diese Anordnung vorgegebenen Richtung erlaubt. Insbesondere ist es nicht möglich, mit dem elektrooptischen Distanzmessgerät einen Referenzpunkt anzupeilen, der nicht in Messrichtung angeordnet ist. Auch ist es nicht möglich, Längenmessungen in mehr als einer Richtung durchzuführen, ohne das Gerät zu bewegen.

### Offenbarung der Erfindung

Die erfindungsgemäße Vorrichtung und der erfindungsgemäße Adapter mit den Merkmalen der unabhängigen Ansprüche haben demgegenüber den Vorteil, dass durch die Umlenkeinrichtung der von der Sendeeinrichtung ausgesandten Messstrahls und/oder der Empfangsbereichs der Empfangseinrichtung umgelenkt werden kann, wodurch es möglich ist, eine Längenmessung in zwei Richtungen durchzuführen, ohne das Gerät bewegen zu müssen.

Hierzu kann zunächst die Umlenkeinrichtung in einer ersten Position so angeordnet werden, dass sie weder den von der Sendeeinrichtung ausgesandten Messstrahl noch den Empfangsbereich der Empfangseinrichtung beeinflusst. Dann kann mit der Vorrichtung oder einer von Adapter aufgenommenen Vorrichtung eine Längenmessung in einer ersten Richtung (nach "vorne") durchgeführt werden.

Anschließend wird die Umlenkeinrichtung in einer zweiten Position so angeordnet, dass sie sowohl den von der Sendeeinrichtung ausgesandten Messstrahl als auch den Empfangsbereich der Empfangseinrichtung in eine zweite Richtung umlenkt. Dann kann, ohne dass die Vorrichtung hierfür bewegt werden müsste, eine Längenmessung in einer zweiten Richtung, die durch die Anordnung der Umlenkeinrichtung gegeben ist (zur Seite) durchgeführt werden. Unter einer Messung "zur Seite" wird hierbei eine Messung in einer von der ersten Richtung abweichenden Richtung verstanden; dies kann eine Messung nach rechts, links, oben oder unten, d.h. um 90° abgelenkt, sein, aber auch eine Messung in einer Richtung, die nicht auf der ersten Richtung senkrecht steht, sondern mit dieser einen anderen Winkel (z.B. 45°) einschließt.

Das Umlenken des optischen Messstrahls kann auch dazu benutzt werden, die Vorrichtung an einem Referenzpunkt (z.B. am Boden oder an der Decke) auszurichten, ohne eine Messung in diese Richtung vorzunehmen. Beispielsweise kann zunächst der optische Messstrahl mit der Umlenkeinrichtung nach oben umgelenkt werden, so dass es möglich ist, die erfindungsgemäße Vorrichtung oder den erfindungsgemäßen Adapter unterhalb eines an der Raumdecke gegebenen Referenzpunkts zu positionieren. Im Anschluss daran wird die Umlenkeinrichtung entfernt oder so bewegt, dass der optische Messstrahl nicht mehr von der Umlenkeinrichtung nach oben umgelenkt wird. Jetzt kann eine Längenmessung entlang der ersten Richtung durchgeführt werden, wobei die Vorrichtung von einem bestimmten Referenzpunkt aus misst.

Durch die in den abhängigen Ansprüchen aufgeführten Maßnahmen sind vorteilhafte Weiterbildungen und Verbesserungen der in den unabhängigen Ansprüchen angegebenen Vorrichtung und des Adapters möglich.

In einer bevorzugten Ausführungsform ist die Umlenkeinrichtung bewegbar mit dem Gehäuse der Vorrichtung oder mit dem Rahmen des Adapters verbunden. Dies erlaubt eine einfache Anordnung des Umlenkelements sowohl in der ersten Position, in der sie weder den von der Sendeeinrichtung ausgesandten Messstrahl noch den Empfangsbereich der Empfangseinrichtung beeinflusst, als auch in der zweiten Position, in der sie den von der Sendeeinrichtung ausgesandten Messstrahl und/oder den Empfangsbereich der Empfangseinrichtung in die zweite Richtung umlenkt. Auch ein Wechsel des Umlenkelements zwischen den beiden Positionen wird dadurch erleichtert, ohne dass die Gefahr besteht, dass die Vorrichtung bewegt wird.

In einer besonders bevorzugten Ausführungsform weist die Umlenkeinrichtung einen Schlitten auf und die das Gehäuse der Vorrichtung oder der Rahmen des Adapters weist mindestens ein Führungselement zum Führen des Schlittens auf. Dadurch kann das Umlenkelement ohne großen Widerstand zwischen den beiden Positionen verschoben werden.

In einer weiteren bevorzugten Ausführungsform weist die Umlenkeinrichtung einen Spiegel oder ein Prisma oder ein anderes für die Wellenlänge des optischen Messstrahls geeignetes Umlenkelement auf.

In einer weiteren bevorzugten Ausführungsform weist die Vorrichtung oder der Adapter eine Libelle oder ein ähnliches Element zum waagrechten Ausrichtung der Vorrichtung auf. Dies ist insbesondere dann erforderlich, wenn mit dem umgelenkten optischen Messstrahl ein Referenzpunkt an der Decke angepeilt werden soll, von dem aus eine Längenmessung erfolgen soll.

Bei herkömmlichen elektrooptischen Vorrichtungen zur Längenmessung erfolgt die Längenmessung üblicherweise von einer Referenzebene der Vorrichtung aus. Diese kann durch das hintere oder das vordere Ende der Vorrichtung bestimmt werden, oder auch durch eine Befestigungsmöglichkeit für ein Stativ in der Mitte der Vorrichtung. Die verwendete Referenzebene kann an der Vorrichtung eingestellt werden, sodass das von der Vorrichtung angezeigte Ergebnis der Längenmessung die von der Referenzebene aus bestimmte Länge darstellt.

Bei einer Messung "zur Seite" entlang der zweiten Richtung durch Umlenkung des optischen Messstrahls und des Empfangsbereichs der Empfangsoptik sollte die Länge vorzugsweise vom Umlenkpunkt des optischen Messstrahls an der Umlenkeinrichtung bis zum Messobjekt gemessen werden. Dazu muss von der tatsächlich ermittelten Länge der Offset abgezogen werden, der sich dadurch ergibt, dass der optische Messstrahl zunächst ein Stück entlang der ersten Richtung "nach vorne" bis zur Umlenkeinrichtung verläuft. Vorzugsweise erfolgt diese Berücksichtigung des Offsets automatisch, wenn die Vorrichtung mittels eines Positionsdetektors an der Vorrichtung oder am Adapter erkennt, dass die Umlenkeinrichtung sich in der zweiten Position befindet, in der sie sowohl den von der Sendeeinrichtung ausgesandten Messstrahl als auch den Empfangsbereich der Empfangseinrichtung in die zweite Richtung umlenkt. Es ist aber ebenfalls möglich, die Berücksichtigung des Offsets manuell an der Vorrichtung zu aktivieren.

In einer weiteren bevorzugten Ausführungsform weist die Vorrichtung oder der Adapter eine mechanische Messeinrichtung auf, mit der ebenfalls eine Längenmessung durchgeführt werden kann. Die mechanische Messeinrichtung erlaubt beispielsweise eine Längenmessung entlang der Außenseite eines Messobjekts, wenn die zu messende Länge nicht durch eine Messfläche begrenzt ist, die den Messstrahl zumindest teilsweise zur Vorrichtung zurückstreut.

Die mechanische Messeinrichtung kann beispielsweise ein Maßband oder ein Gliedermaßstab sein und kann an der Seite der Vorrichtung oder des Adapters angeordnet sein.

Die mechanische Messeinrichtung erlaubt es auch eine Längenmessung in einer Richtung durchzuführen, während der optische Messstrahl durch die Umlenkeinrichtung umgelenkt wird und beispielsweise dazu benutzt wird einen Referenzpunkt anzupeilen, von dem aus die Messung erfolgen soll.

In einer weiteren bevorzugten Ausführungsform ist die mechanische Messeinrichtung mit dem Gehäuse der Vorrichtung oder dem Rahmen des Adapters bewegbar (z.B. drehbar oder klappbar) verbunden, sodass die Richtung, in der die Messung mit der mechanischen Messeinrichtung erfolgen soll, verändert werden kann.

In einer weiteren bevorzugten Ausführungsform kann die mit der mechanischen Messeinrichtung gemessene Länge automatisch (beispielsweise mittels einer magnetischen oder einer optischen Kodierung auf dem Maßband oder auf der Trommel des Maßbands) ausgelesen werden und auf einem Anzeigeelement der Vorrichtung dargestellt werden. Der erfindungsgemäße Adapter weist hierzu eine Schnittstelle zur Übertragung der gemessenen Länge an die im Adapter aufgenommene Vorrichtung auf.

In einer weiteren bevorzugten Ausführungsform des Adapters weist dieser mindestens ein Halteelement zum Halten der Vorrichtung zur Längenmessung auf.

Anhand der Zeichnungen wird die Erfindung nachstehend eingehend erläutert. Es zeigt:
Fig. 1 eine erste Ausführungsform eines erfindungsgemäßen Adapters mit aufgenommener Vorrichtung zur Längenmessung;
Fig. 2 eine zweite Ausführungsform eines erfindungsgemäßen Adapters mit aufgenommener Vorrichtung zur Längenmessung;
Fig. 3 die Ausführungsform gemäß Fig. 2, wobei die Umlenkeinrichtung sich in der ersten Position befindet;
Fig. 4 die zweite Ausführungsform eines erfindungsgemäßen Adapters ohne aufgenommene Vorrichtung zur Längenmessung;
Fig. 5 die zweite Ausführungsform eines erfindungsgemäßen Adapters mit aufgenommener Vorrichtung zur Längenmessung von hinten; und
Fig. 6 die zweite Ausführungsform eines erfindungsgemäßen Adapters ohne aufgenommene Vorrichtung zur Längenmessung von unten.

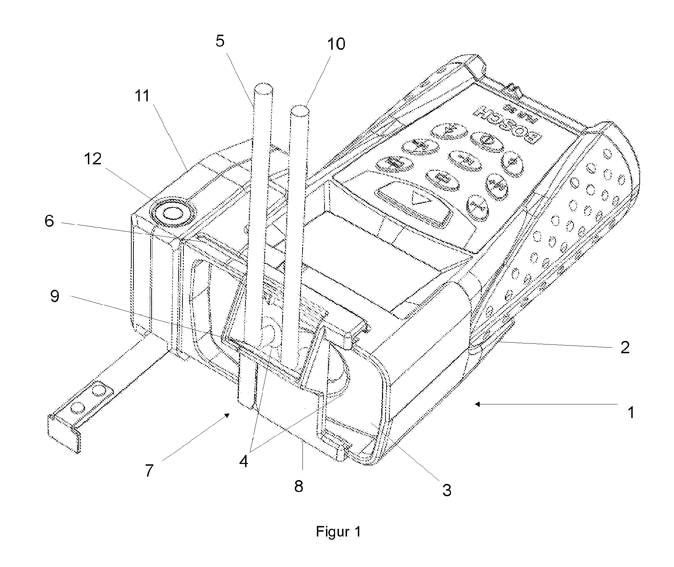

In der Fig. 1 ist eine erfindungsgemäße Ausführungsform eines Adapters zur Aufnahme einer elektrooptischen Vorrichtung zur Längenmessung gezeigt, in die eine solche Vorrichtung aufgenommen ist.

Der Adapter (1) weist einen Rahmen (2) auf, in den die Vorrichtung eingesetzt und in dem sie sicher gehalten wird. Die Vorrichtung besitzt an ihrem vorderen Ende (3) Aussparungen (4) für den Durchtritt des optischen Messstrahls (5) und von Teilen des von einem Messobjekt zurückgestreuten Messstrahls.

Ebenfalls am vorderen Ende des Rahmens sind zwei schienenartige Führungselemente (6) angeordnet, entlang derer sich der Schlitten (8) einer Umlenkeinrichtung (7) bewegen kann. Die Umlenkeinrichtung weist weiterhin einen Spiegel (9) zum Umlenken des optischen Messstrahls und des Empfangsbereichs (10, hier schematisch dargestellt) der Empfangseinrichtung auf.

Die Umlenkeinrichtung ist in ihrer zweiten Position dargestellt, in der sie sowohl den optischen Messstrahl als auch den Empfangsbereichs der Empfangseinrichtung um 90° nach oben umlenkt.

An der Seite des Rahmens ist ein Maßband (11) als mechanische Messeinrichtung angebracht, das eine von der elektrooptischen Vorrichtung unabhängige Längenmessung erlaubt.

Auf der Oberseite des Maßbands befindet sich eine Libelle (12) zum waagrechten Ausrichten der Vorrichtung.

Die Umlenkeinrichtung kann entlang der schienenartigen Führungselemente zwischen der ersten und der zweiten Position hin- und herbewegt werden. Dadurch sind Längenmessungen sowohl nach oben als auch nach vorne möglich, ohne die Vorrichtung verkippen zu müssen.

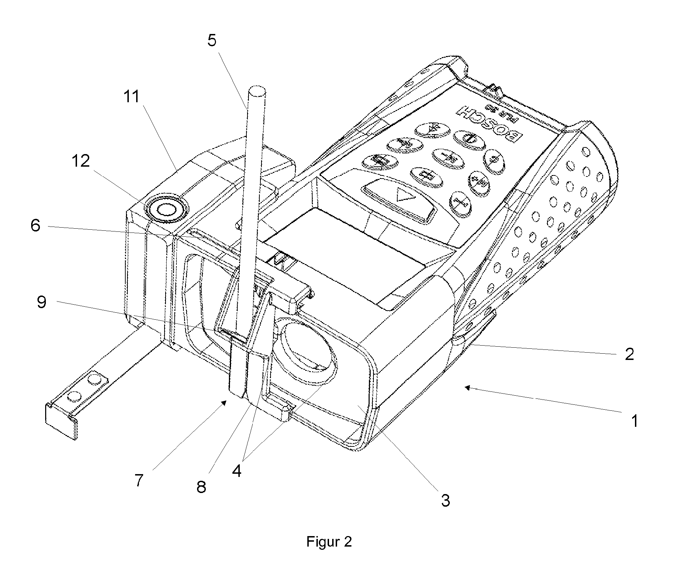

In der Fig. 2 ist eine weitere erfindungsgemäße Ausführungsform eines Adapters zur Aufnahme einer elektrooptischen Vorrichtung zur Längenmessung gezeigt, in die eine solche Vorrichtung aufgenommen ist.

Der Adapter (1) weist einen Rahmen (2) auf, in den die Vorrichtung eingesetzt und in dem sie sicher gehalten wird. Die Vorrichtung besitzt an ihrem vorderen Ende (3) Aussparungen (4) für den Durchtritt des optischen Messstrahls (5) und von Teilen des von einem Messobjekt zurückgestreuten Messstrahls.

Ebenfalls am vorderen Ende des Rahmens sind zwei schienenartige Führungselemente (6) angeordnet, entlang derer sich der Schlitten (8) einer Umlenkeinrichtung (7) bewegen kann. Die Umlenkeinrichtung weist weiterhin einen Spiegel (9) zum Umlenken des optischen Messstrahls auf. Der Empfangsbereich der Empfangseinrichtung wird durch den Spiegel nicht beeinflusst.

Die Umlenkeinrichtung ist in ihrer zweiten Position dargestellt, in der sie den optischen Messstrahl um 90° nach oben umlenkt.

Damit ist es möglich, einen Referenzpunkt an der Decke anzupeilen, von dem aus die Längenmessung erfolgen soll.

An der Seite des Rahmens ist ein Maßband (11) als mechanische Messeinrichtung angebracht, das eine von der elektrooptischen Vorrichtung unabhängige Längenmessung erlaubt.

Auf der Oberseite des Maßbands befindet sich eine Libelle (12) zum waagrechten Ausrichten der Vorrichtung.

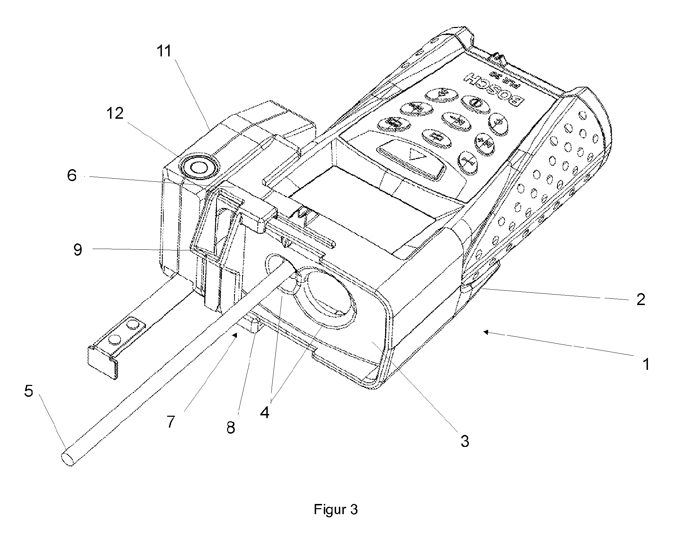

In der Fig. 3 ist der Adapter aus Fig. 2 mit aufgenommener Vorrichtung zur Längenmessung gezeigt, wobei in dieser Figur die Umlenkeinrichtung in ihrer ersten Position dargestellt ist, in der sie den optischen Messstrahl nicht beeinflusst. Somit kann mit der elektrooptischen Vorrichtung eine Längenmessung nach "vorne" erfolgen, nachdem die Vorrichtung zuvor an einem Referenzpunkt an der Decke ausgerichtet wurde.

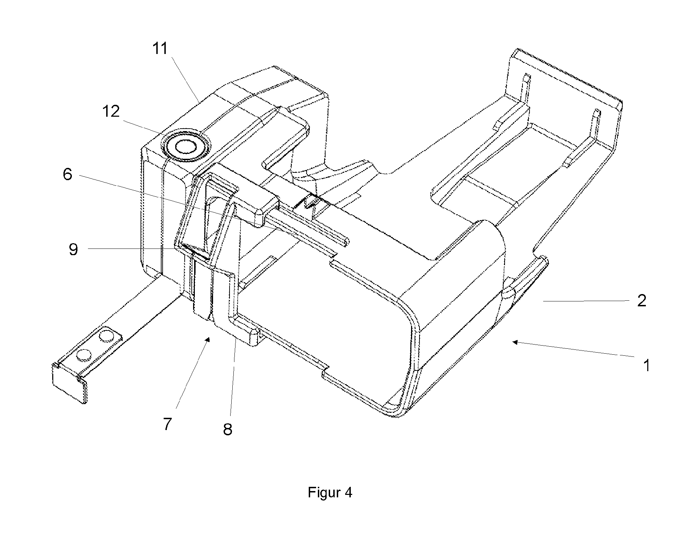

In der Fig. 4 ist der Adapter aus Fig. 3 ohne aufgenommene Vorrichtung zur Längenmessung gezeigt.

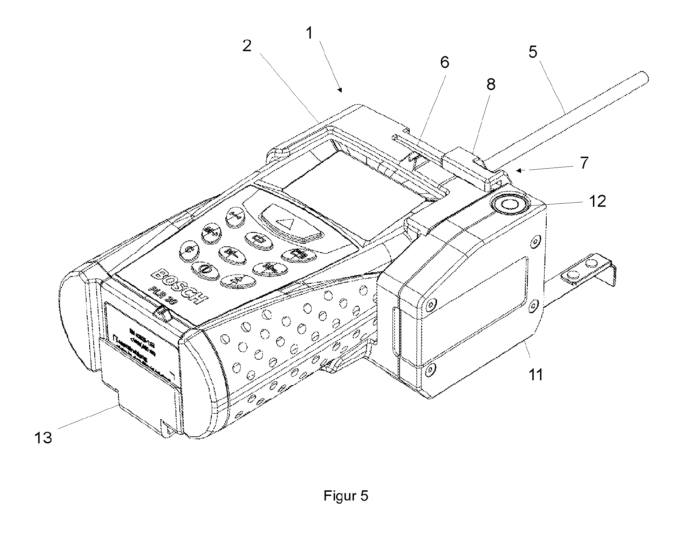

In der Fig. 5 ist der Adapter mit aufgenommener Vorrichtung aus Fig. 3 in einer anderen Ansicht dargestellt. Hier ist deutlich das Halteelement (13) zu sehen, mit dem die Vorrichtung zur Längenmessung sicher im Adapter gehalten werden wird.

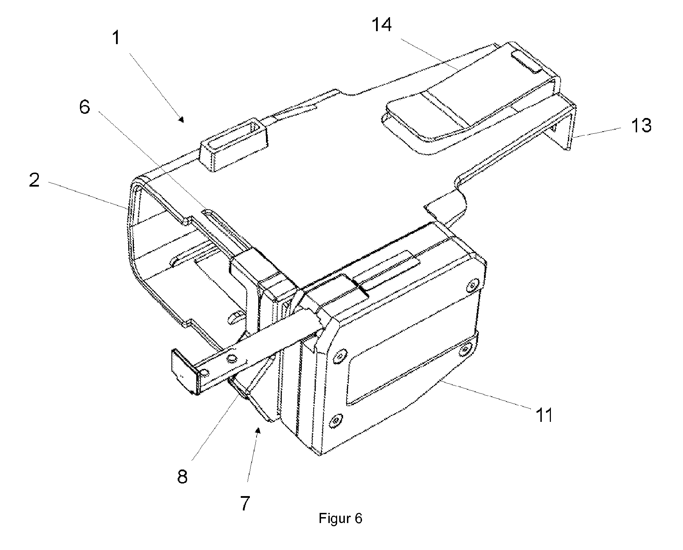

In der Fig. 6 ist der Adapter ohne aufgenommene Vorrichtung aus Fig. 4 in einer Ansicht von unten gezeigt. Hier ist ein Gürtelclip (14) zu sehen, mit dem der Adapter beispielsweise an der Kleidung des Benutzers befestigt werden kann.

## Patentansprüche

1. Vorrichtung zur Längenmessung aufweisend ein Gehäuse, eine Sendeeinrichtung zum Erzeugen eines optischen Messstrahls und eine Empfangseinrichtung zum Detektieren von Teilen des von einem Messobjekt zurückgestreuten Messstrahls,
**gekennzeichnet durch**
eine Umlenkeinrichtung zum Umlenken des von der Sendeeinrichtung ausgesandten Messstrahls und/oder des Empfangsbereichs der Empfangseinrichtung.

2. Vorrichtung nach Anspruch 1, wobei die Umlenkeinrichtung bewegbar mit dem Gehäuse verbunden ist.

3. Vorrichtung nach Anspruch 2, wobei die Umlenkeinrichtung einen Schlitten aufweist und wobei das Gehäuse mindestens ein Führungselement zum Führen des Schlittens aufweist.

4. Vorrichtung nach einem der vorangegangenen Ansprüche, wobei die Umlenkeinrichtung einen Spiegel oder ein Prisma aufweist.

5. Vorrichtung nach einem der vorangegangenen Ansprüche, wobei die Vorrichtung eine mechanische Messeinrichtung aufweist.

6. Vorrichtung nach Anspruch 5, wobei die mechanische Messeinrichtung bewegbar mit dem Gehäuse verbunden ist.

7. Vorrichtung nach einem der Ansprüche 5 oder 6, wobei die Vorrichtung ein Anzeigeelement zur Anzeige der mit dem optischen Messstrahl gemessenen Länge aufweist, wobei der Messwert der mechanischen Messeinrichtung auf dem Anzeigeelement darstellbar ist.

8. Adapter zur Aufnahme einer Vorrichtung zur Längenmessung mit einem Gehäuse, einer Sendeeinrichtung zum Erzeugen eines optischen Messstrahls und einer Empfangseinrichtung zum Detektieren von Teilen des von einem Messobjekt zurückgestreuten Messstrahls, wobei der Adapter einen Rahmen zur Aufnahme der Vorrichtung aufweist,
**gekennzeichnet durch**
eine Umlenkeinrichtung zum Umlenken des von der Sendeeinrichtung ausgesandten Messstrahls und/oder des Empfangsbereichs der Empfangseinrichtung.

9. Adapter nach Anspruch 8, wobei die Umlenkeinrichtung bewegbar mit dem Rahmen verbunden ist.

10. Adapter nach Anspruch 9, wobei die Umlenkeinrichtung einen Schlitten aufweist und wobei der Rahmen mindestens ein Führungselement zum Führen des Schlittens aufweist.

11. Adapter nach einem der Ansprüche 8 oder 9, wobei die Umlenkeinrichtung einen Spiegel oder ein Prisma aufweist.

12. Adapter nach einem der Ansprüche 8 bis 10, wobei der Adapter eine mechanische Messeinrichtung aufweist.

13. Adapter nach Anspruch 12, wobei die mechanische Messeinrichtung bewegbar mit dem Rahmen verbunden ist.

14. Adapter nach einem der Ansprüche 12 oder 13, wobei der Adapter eine Schnittstelle zur Übertragung der mit der mechanischen Messeinrichtung gemessenen Länge an die Vorrichtung aufweist.

15. Adapter gemäß einem der Ansprüche 8 bis 14, wobei der Adapter mindestens ein Halteelement zum Halten der Vorrichtung zur Längenmessung aufweist.
